# EUROPÄISCHE PATENTSCHRIFT

(11) **EP 1 112 832 B1**
(45) Veröffentlichungstag und Bekanntmachung des Hinweises auf die Patenterteilung: **10.11.2004**
(21) Anmeldenummer: 00119239.2
(22) Anmeldetag: 06.09.2000
(51) Int. Cl.: B29C 45/30

(54) **Offene Spritzgiessdüse**
Injection nozzle
Buse d'injection

(30) Priorität: 23.11.1999 DE 19956214
(43) Veröffentlichungstag der Anmeldung: 04.07.2001
(73) Patentinhaber: Männer, Otto Heisskanalsysteme GmbH & Co KG, 79353 Bahlingen (DE)
(72) Erfinder: Männer, Hans-Peter, 79353 Bahlingen (DE); Würtstlin, Walter, 79353 Bahlingen (DE)
(74) Vertreter: Dimmerling, Heinz, Dipl.-Ing.

(56) Entgegenhaltungen:
- US-A- 5 556 582
- US-A- 5 798 130
- PATENT ABSTRACTS OF JAPAN vol. 009, no. 025 (M-355), 2. Februar 1985 (1985-02-02) -& JP 59 169827 A (MITSUBISHI JUKOGYO KK), 25. September 1984 (1984-09-25)

## Beschreibung

Die Erfindung betrifft eine offene Spritzgießdüse mit einer an ihrem formseitigen Ende mehrere Spitzen aufweisenden Nadel zum Spritzgießen eines Formteiles mit mehreren Angußstellen, wobei jede Spitze in Gebrauchsstellung mit einer Eintrittsöffnung in eine Kavität der Form einen Ringspalt bildet.

Eine derartige offene Spritzgießdüse ist bekannt und hat sich bewährt. Beispielsweise können damit Teile gespritzt werden, bei denen eine zentrale Angußstelle nicht möglich ist, weil an dieser Stelle das fertige Teil möglicherweise später einen Durchbruch haben soll. Mit einer mehrere Spitzen aufweisenden Nadel können dann mehrere Angußstellen um einen solchen Durchbruch herum angeordnet werden.

Problematisch ist bei solchen offenen Spritzgießdüsen vor allem das Einspritzen während der Nachdruckphase, in welcher die Form beziehungsweise die in der Form befindliche Kavität schon weitgehend gefüllt ist und nur noch wenig Spritzgießmaterial unter hohem Druck eingespritzt werden kann, weil die Ringspalte an den einzelnen Nadelspitzen aufgrund der nachlassenden Fließgeschwindigkeit ein Erstarren des Spritzgießmateriales, in der Regel Kunststoff, bewirken. Somit sind offene Spritzgießdüsen bisher in der Regel nur für geringerwertige Teile geeignet.

Die Druckschrift US-A-5 798 130 zeigt eine Angußöffnung mit einem axial verstellbarem Kolbenverschluss.

Zwar könnten man den Ringspalt an der jeweiligen Spitze größer machen, jedoch ergäbe sich dann beim Entformen ein ungünstiger Anguß mit einem Abriß, der bei vielen Spritzgießteilen nicht akzeptabel ist.

Es besteht deshalb die Aufgabe, eine Spritzgießdüse der eingangs genannten Art zu schaffen, mit der auch in der Nachdruckphase noch Spritzgießmaterial in eine Form eingebracht und dennoch ein sauberer Abriß erzielt werden kann.

Zur Lösung dieser Aufgabe ist die eingangs definierte Spritzgießdüse dadurch gekennzeichnet, daß die Nadel innerhalb der offenen Düse in Richtung ihrer Längserstreckung verschieblich gehalten und zur Vergrößerung der im Bereich der Nadelspitze befindlichen Ringspalte und Öffnungen zurückziehbar ist.

Somit kann beispielsweise zunächst mit einem relativ engen Ringspalt mit hoher Fließgeschwindigkeit gespritzt werden, was den Vorteil hat, daß gleichzeitig in den Ringspalten eine große Reibungswärme entsteht, die den Fließvorgang begünstigt und aufrecht erhält. Ist die Form beziehungsweise die Kavität in der Form jedoch nahezu gefüllt und beginnt das Spritzgießmaterial einerseits zu erstarren und andererseits zu schwinden, so daß eine Nachdruckphase erforderlich ist, bei der dann aber die Reibungswärme aufgrund der erheblich verminderten Fließgeschwindigkeit nicht mehr zur Verfügung steht, kann die Nadel erfindungsgemäß zurückgezogen und dadurch der Ringspalt vergrößert werden, so daß dennoch auch in der Nachdruckphase unter jetzt ungünstigeren Bedingungen Spritzgießmaterial nachgedrückt werden kann. Kurz vor der Beendigung eines solchen Spritzgießvorganges kann die Nadel wieder in Längsrichtung vorgeschoben werden, so daß beim Entformen entsprechend kleine Ringspalte vorhanden sind und ein entsprechend sauberer Abriß entsteht.

Durch die Erfindung ist es aber auch möglich, schon kurz nach dem ersten Beginn des Spritzvorganges die Nadel zurückzuziehen, bis auch die Nachdruckphase beendet ist und erst dann die Nadel wieder vorzuschieben, um günstige Verhältnisse für das Entformen zu schaffen.

Besonders zweckmäßig ist es, wenn an einer außerhalb der Düse befindlichen Verlängerung der Nadel ein Antrieb für ihre Hin- und Herbewegung, beispielsweise ein Kolbenantrieb, ein Positioniermotor, ein Piezoaktor oder dergleichen angreift. Damit lassen sich die erfindungsgemäß bei der offenen Spritzgießdüse vorgesehenen Verstellbewegungen der Nadel gut durchführen.

Dadurch ist es in Weiterbildung der Erfindung möglich, daß die Hin- und Herbewegung der Nadel gesteuert ist und die Spitzen der Nadel zu Beginn eines Spritzgießvorganges weit oder tief unter Verkleinerung des Ringspaltes in diesen hinein verstellbar oder verstellt sind, um die schon erwähnte hohe Fließgeschwindigkeit zu erhalten.

Die verstellbare Nadel kann, wie schon kurz erwähnt, nach einem ersten Beginn des Spritzgießvorganges bis zum Ende der Nachdruckphase zurückziehbar und dann vor dem Entformen wieder tiefer in die Angußöffnungen verschiebbar sein, um eine bestmögliche Anpassung der Nadelposition an den Spritzgießvorgang zu erreichen.

Vor allem bei Kombination einzelner oder mehrerer der vorbeschriebenen Merkmale und Maßnahmen können die Vorteile einer relativ preiswerten offenen Spritzgießdüse mit dem Erfordernis kombiniert werden, auch eine gute Nachdruckphase zu erlauben und dennoch einen sauberen Abriß beim Entformen zu erhalten.

Nachfolgend ist ein Ausführungsbeispiel der Erfindung anhand der Zeichnung näher beschrieben. Es zeigt in schematisierter Darstellung:
- Fig.1: eine teilweise im Längsschnitt gehaltene Seitenansicht einer erfindungsgemäßen offenen Spritzgießdüse, deren Nadel mehrere Spitzen hat und an ihrem diesen Spitzen abgewandten Ende mit einem Antrieb für eine Hin- und Herbewegung dieser Nadel verbunden ist,
- Fig.2: in vergrößertem Maßstab einen Längsschnitt der Nadelspitze innerhalb der Düsenmündung und am Eintritt in eine Form, wobei die Nadel ihre vorgeschobene Position hat, in welcher die die Nadelspitzen umschließenden Ringspalte klein sind, sowie
- Fig.3: eine der Fig.2 entsprechende Darstellung nach dem Zurückziehen der Nadel und demgemäß einem Vergrößern der Ringspalte.

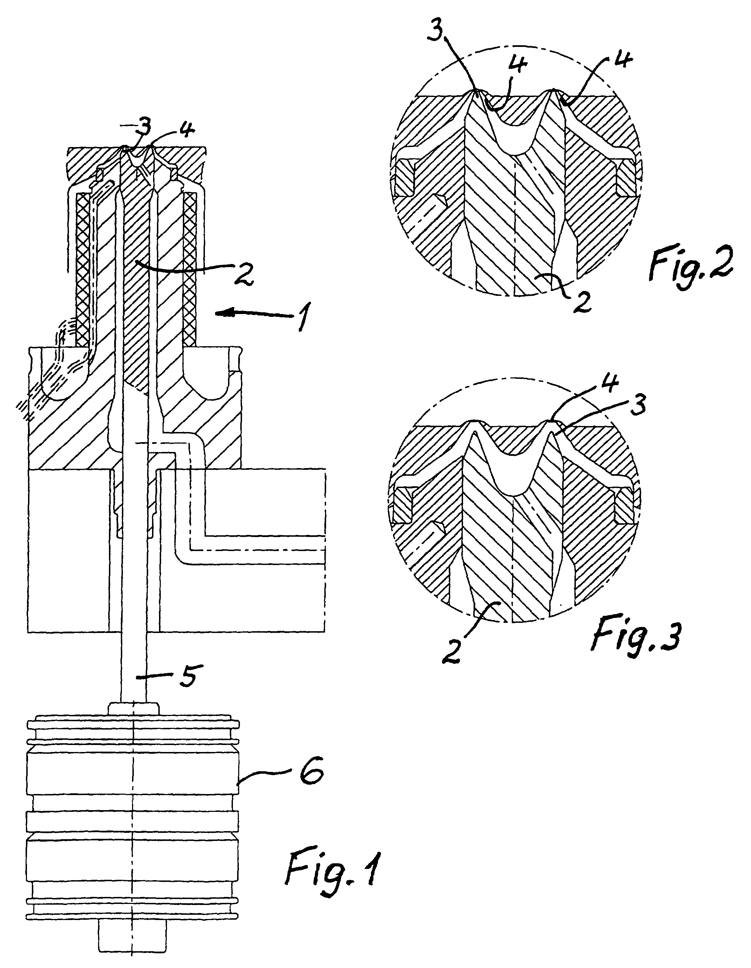

Eine im ganzen mit 1 bezeichnete offene Spritzgießdüse hat eine Nadel 2, an deren formseitigen Ende mehrere Spitzen 3, beispielsweise drei in gleichmäßigem Abstand zueinander angeordnete Spitzen 3 vorgesehen sind. Gemäß den Figuren 2 und 3 sind diese Spitzen 3 konisch ausgebildet und ragen in ebenfalls konische Eintrittsöffnungen 4, so daß sich in diesen Eintrittsöffnungen 4 gemäß Fig.2 Ringspaltenergeben, durchwelche das Spritzgießmaterial in bekannter Weise in eine Form und deren Kavität eingespritzt werden kann.

Die Nadel 2 ist in Richtung ihrer Längserstreckung verschieblich und kann zur Vergrößerung der im Bereich der Nadelspitzen 3 befindlichen Ringspalte beziehungsweise der dort vorgesehenen Öffnungen 4 zurückgezogen werden, wie der Vergleich der Figuren 2 und 3 verdeutlicht. Dabei gehen die Ringspalte der Öffnungen 4 nach dem Zurückziehen der Nadel gemäß Fig.3 am eigentlichen Eintritt in die Kavität der Form sogar in eine etwa kreisförmige Öffnung über, die erst dann wieder zum Ringspalt wird, wenn die Spitzen 3 in die in Fig.2 dargestellte Lage vorgeschoben sind.

An einer außerhalb der Düse 1 befindlichen Verlängerung 5 der Nadel 2 greift im Ausführungsbeispiel ein Kolbenantrieb 6 an, der aber auch durch einen Positioniermotor oder einen Piezoaktor oder dergleichen ersetzt sein könnte. Aus den Figuren 2 und 3 ergibt sich, daß nur relativ geringe Längsverschiebungen der Nadel 2 ausreichen, um die unterschiedlichen Größen von Ringspalten an den Öffnungen 4 zusammen mit den Spitzen 3 zu erzeugen.

Die Hin- und Herbewegung der Nadel 2 kann insbesondere über ihren Antrieb gesteuert sein, so daß die Spitzen 3 der Nadel 2 beispielsweise zu Beginn eines Spritzgießvorganges weit oder tief unter Verkleinerung des Ringspaltes in die Öffnung 4 hinein verstellbar oder verstellt sein können, wie es Fig.2 zeigt. für die Nachdruckphase kann dann die Nadel in die in Fig.3 dargestellte Position zurückgezogen werden, um zum Entformen wieder die Lage gemäß Fig.2 einzunehmen.

Es ist aber auch möglich, die verstellbare Nadel 2 nach einem ersten Beginn des Spritzgießvorganges aus der in Fig.2 dargestellten Lage bis zum Ende der Nachdruckphase in die in Fig.3 dargestellte Lage zurückzuziehen und sie erst wieder vor dem Entformen tiefer in die Angußöffnungen 4 und etwa in die Position gemäß Fig.2 zu verschieben.

In gleicher Weise könnte die Spritzgießdüse auch mit einer anderen Zahl von Spitzen 3, gegebenenfalls sogar nur mit einer einzigen Spitze 3 ausgestattet und in gleicher Weise verschieblich und steuerbar verschiebbar gestaltet sein.

Die offene Spritzgießdüse 1 hat eine Nadel 2, die in ihrer Längserstreckungsrichtung innerhalb der Düse 1 in Richtung ihrer Spitze 3 verschieblich und auch wieder zurückziehbar ist, so daß in der in die Form beziehungsweise deren Kavität führenden Öffnung 4 zusammen mit dieser Nadelspitze 3 Ringspalte unterschiedlicher Größen in Anpassung an die jeweilige Spritzgießphase beziehungsweise auch an den Vorgang des Entformens gebildet werden können.

## Patentansprüche

1. Offene Spritzgießdüse (1) mit einer an ihrem formseitigen Ende mehrere Spitzen aufweisenden Nadel (2) zum Spritzgießen eines Formteiles mit mehreren Angußstellen, wobei jede Spitze (3) in Gebrauchsstellung mit einer Eintrittsöffnung in eine Kavität der Form einen Ringspalt bildet, **dadurch gekennzeichnet, daß** die Nadel (2) innerhalb der offenen Düse (1) in Richtung ihrer Längserstreckung verschieblich gehalten und zur Vergrößerung der im Bereich der Nadelspitze (3) befindlichen Ringspalte und Öffnungen (4) zurückziehbar ist.

2. Offene Spritzgießdüse nach Anspruch 1, **dadurch gekennzeichnet, daß** an einer außerhalb der Düse (1) befindlichen Verlängerung (5) der Nadel (2) ein Antrieb für ihre Hin- und Herbewegung, beispielsweise ein Kolbenantrieb, ein Positioniermotor, ein Piezoaktor oder dergleichen angreift.

3. Offene Spritzgießdüse nach Anspruch 1 oder 2, **dadurch gekennzeichnet, daß** die Hin- und Herbewegung der Nadel (2) gesteuert ist und die Spitzen (3) der Nadel (2) zu Beginn eines Spritzgießvorganges weit oder tief unter Verkleinerung des Ringspaltes in die Öffnungen (4) hinein verstellbar oder verstellt sind.

4. Offene Spritzgießdüse nach einem der Ansprüche 1 bis 3, **dadurch gekennzeichnet, daß** die verstellbare Nadel nach einem ersten Beginn des Spritzgießvorganges bis zum Ende der Nachdruckphase zurückziehbar und dann vor dem Entformen wieder tiefer in die Angußöffnungen verschiebbar ist.

## Claims

1. Open injection-moulding die (1) comprising a needle (2) having a plurality of tips at its end nearest the mould, for injection moulding of a shaped article having a plurality of gates, each tip (3) forming an annular gap in the position of use with an entry orifice in a cavity of the mould, **characterized in that** the needle (2) is held inside the open die (1) so as to be displaceable in the direction of its longitudinal dimension and can be retracted for enlarging the annular gaps and orifice (4) present in the region of the needle tip (3).

2. Open injection-moulding die according to Claim 1, **characterized in that** a drive for moving the needle (2) back and forth, for example a piston drive, a positioning motor, a piezoactuator or the like, engages an extension (5) of the needle (2), which extension is located outside the die (1).

3. Open injection-moulding die according to Claim 1 or 2, **characterized in that** the back and forth movement of the needle (2) is controlled and the tips (3) of the needle (2) can be adjusted or are adjusted far or deep into the orifices (4) at the beginning of an injection moulding process, making the annular gap smaller.

4. Open injection-moulding die according to any of Claims 1 to 3, **characterized in that** the adjustable needle is retractable after a first beginning of the injection moulding process up to the end of the afterpressure phase and then is displaceable again deeper into the gates before demoulding.

## Revendications

1. Buse d'injection (1) de type ouvert comportant une aiguille (2) munie de plusieurs pointes à son extrémité située côté moule, en vue du moulage par injection d'une pièce comprenant plusieurs culots, chaque pointe (3) formant un interstice annulaire en position d'utilisation, en coopération avec un orifice d'entrée dans une cavité du moule, **caractérisée par le fait que** l'aiguille (2) est retenue à coulissement dans la direction de son étendue longitudinale, à l'intérieur de la buse (1) de type ouvert, et peut être rétractée afin d'agrandir les interstices annulaires et les orifices (4) situés dans la région de la pointe (3) de ladite aiguille.

2. Buse d'injection de type ouvert selon la revendication 1, **caractérisée par le fait qu'**un entraînement imprimant un va-et-vient à l'aiguille, par exemple un entraînement par piston, un moteur de positionnement, un actionneur piézoélectrique ou dispositifs similaires, vient en prise avec un prolongement (5) de ladite aiguille (2) qui est situé à l'extérieur de la buse (1).

3. Buse d'injection de type ouvert selon la revendication 1 ou 2, **caractérisée par le fait que** le mouvement de va-et-vient de l'aiguille (2) est commandé et, au début d'un processus de moulage par injection, les pointes (3) de ladite aiguille (2) sont insérables ou insérées d'une distance ou d'une profondeur conséquente, dans les orifices (4), avec rapetissement de l'interstice annulaire.

4. Buse d'injection de type ouvert selon l'une des revendications 1 à 3, **caractérisée par le fait que** l'aiguille mobile peut être rétractée après une première amorce du processus de moulage par injection, jusqu'à l'achèvement de la phase de pression réitérée, et peut ensuite pénétrer de nouveau plus profondément dans les orifices d'injection, préalablement au démoulage.
